# FASCICULE DE BREVET EUROPEEN

(11) **EP 1 195 183 B1**
(45) Date de publication et mention de la délivrance du brevet: **20.08.2014**
(21) Numéro de dépôt: 01402373.3
(22) Date de dépôt: 14.09.2001
(51) Int. Cl.: A63F 9/18

(54) **Procédé de divertissement basé sur les jeux concours à choix multiples**
Auf Multiple-Choice-Wettbewerbsspiele basiertes Unterhaltungsverfahren
Entertainment method based on multiple choice competition games

(30) Priorité: 15.09.2000 FR 0011977
(43) Date de publication de la demande: 10.04.2002
(73) Titulaire: Touchtunes Music Corporation, Las Vegas, NV 89104 (US)
(72) Inventeur: Nathan, Guy, Nun's Island, Quebec H3E 1H7 (CA); Mastronardi, Tony, Pierrefonds, Quebec, H8Y 3L2 (CA)
(74) Mandataire: Debay, Yves

(56) Documents cités:
- WO-A-01/00290
- US-A- 4 593 904
- US-A- 5 697 844

## Description

La présente invention concerne un procédé de divertissement basé sur les jeux concours de questions à réponses à choix multiples portant sur des oeuvres audio ou des oeuvres visuelles (film, clip vidéo, pièces de théâtre...etc.)

Il est connu dans l'art antérieur des jeux, notamment radiophoniques ou télévisés, basés sur les connaissances musicales des joueurs. Par exemple, le jeu est du type questions/réponses au cours duquel un joueur doit donner, par exemple, le nom de l'artiste, le titre ou le mot suivant d'une chanson dont un court extrait est exécuté. Dans ce type de jeu, les questionnaires sont préparés avant le jeu et celui-ci se déroule, soit avec un seul joueur, soit, dans le cadre d'un jeu télévisé avec plusieurs concurrents réunis dans un même lieu et mis en compétition sur la même question.

Il est également connu de l'art antérieur, notamment par les demandes US 5,697,844 A, US 4,593,904 A et WO 01/00290 A, des systèmes et/ou procédé de divertissement basé sur des jeux comportant des questions à choix multiple, relatives à des informations audiovisuelles diffusées vers des terminaux permettant de reproduire les informations audivisuelles, d'afficher les questions et de saisir des réponses. Un inconvénient de ces systèmes et procédés est que les questions et réponses concernent des informations audiovisuelles pré-déterminées dans un système central transmettant ces informations aux terminaux, Pour rendre le jeu plus intéressante pour les utilisateurs, il peut être intéressant que les questions concernent des informations audiovisuelles qui ne sont pas forcément sélectionnées dans une base de données arbitraire complètement indépendante des connaissances de l'utilisateur en matières d'oeuvres audiovisuelles.

La présente invention a donc pour objet de pallier les inconvénients de l'art antérieur en proposant un procédé de divertissement basé sur le thème de la musique permettant à un ou plusieurs joueurs, situés dans des lieux éloignés, de jouer seul ou de participer à des tournois de jeux sur le thème de la musique.

Ce but est atteint par un système de divertissement basé sur les jeux concours à choix multiples selon la revendication 1.

Des développements supplémentaires de l'invention sont décrits dans les revendications 3 à 9.

Un autre objectif est de permettre d'attribuer des lots ou récompense en fonction du classement des participants.

Ce but est atteint par un système de divertissement selon la revendication 2.

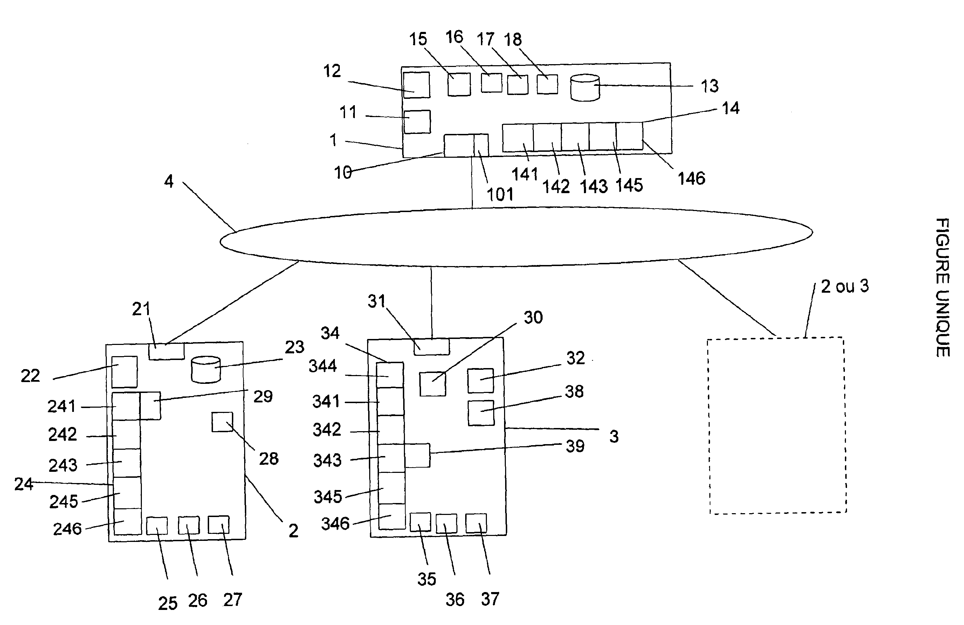

L'invention, avec ses caractéristiques et avantages, ressortira plus clairement à la lecture de la description faite en référence au dessin unique annexé qui représente un diagramme simplifié d'un réseau comprenant un serveur et une pluralité de terminaux permettant de mettre en oeuvre le procédé selon l'invention.

L'invention va à présent être décrite en référence à la figure. Le procédé de divertissement selon l'invention s'applique plus particulièrement à un réseau informatique comprenant un serveur (1) spécialisé dans la distribution d'informations audiovisuelles, telles que par exemple des chansons, des oeuvres musicales, cinématographiques, télévisuelles... etc. Ce serveur (1) est connecté par des moyens de communication (10) à une pluralité de terminaux (2, 3) par l'intermédiaire d'un réseau (4) de communication et de moyens (21, 31) de communication installés sur chaque terminal (2, 3). Le réseau (4) de communication peut être de tout type connu. Notamment, le réseau (4) de communication peut être du type réseau téléphonique filaire, cellulaire, Hertzien, réseau câblé, optique ou réseau satellite ou bien une combinaison de ces réseaux. De même, le réseau (4) de communication peut faire intervenir des serveurs multiservices intermédiaires (non représentés) qui sont alors connectés entre le serveur (1) spécialisé et un groupe (2, 3) de terminaux connectés au serveur multiservice. A titre d'exemple, un serveur multiservice peut être un opérateur de téléphonie cellulaire, un fournisseur d'accès Internet, un fournisseur d'accès à un réseau de télévision câblé ou à un réseau satellite. Dans ce cas, les terminaux (3) peuvent être un téléphone cellulaire, un décodeur connecté à une télévision ou bien un ordinateur personnel. De même, un terminal (2) peut être un système de reproduction audiovisuel tel que décrit dans les demandes de brevets EP786121 et EP974896.

Chaque terminal (2, 3) comprend au minimum des moyens de mémorisation associés à des moyens de traitement des informations mémorisées, par exemple, sous forme de données d'oeuvres compressées et encryptées de programmes ou module de programmes et de messages, et des moyens (22, 32) d'interaction avec l'utilisateur. Les moyens (22, 32) d'interaction comprennent un moyen d'affichage, tel qu'un écran, et au moins un moyen de sélection choisi, par exemple, parmi les dispositifs suivants, écran tactile, pointeur du type souris, touche de navigation dans un menu, ou encore un système à commande vocale.

Le principe du procédé de divertissement selon l'invention est l'exécution d'un programme de jeu lancé par un bouton actionné par ou sur un des moyens interactifs et est basé sur un questionnaire à choix multiples portant sur un thème, par exemple, de musique. La particularité de ce questionnaire est qu'il est basé sur la collecte d'informations dans une base de données (13, 23) mémorisée sur le serveur (1) spécialisé et éventuellement sur un terminal spécifique (2). Dans ce cas le terminal spécifique (2) est un système de reproduction audiovisuel tel que défini dans la demande de brevet EP786121 et EP974896. Dans un mode de réalisation, la base de données (13, 23) comprend au moins des informations relatives à des morceaux de musique. Notamment, la base de données comprend au moins un tableau comprenant les titres des oeuvres, les artistes interprètes, le ou les auteurs, les maisons d'édition du disque ou de l'oeuvre, l'année de parution et toute autre information caractérisant l'oeuvre qu'elle soit musicale ou visuelle. De plus, la base de données (13, 23) comprend tout ou partie des données nécessaires pour la reproduction sonore des morceaux de musique. Selon l'invention, chaque question comprend la restitution sonore et/ou visuelle de tout ou partie de l'oeuvre.

Les questionnaires sont générés principalement de deux façons.

Selon une première variante, les questionnaires sont réalisés automatiquement par un module (14, 24, 34) de jeu mémorisé sur chaque terminal (2, 3) ou sur le serveur (1) spécialisé. Le module (14, 24, 34) de jeu peut également être mémorisé sur un serveur multiservice. La fonction principale du module (14, 24, 34) de jeu est en fait d'une part de déclencher l'exécution, par des moyens de décompression et éventuellement de décryptage, d'au moins un extrait d'une oeuvre et d'autre part de générer un écran d'affichage comprenant au moins une question sur l'extrait de l'oeuvre de la base de données (13, 23) exécutée par le terminal et un choix parmi au moins deux réponses possibles affichées et sélectionnables par un des moyens (22, 32) d'interaction.

Dans un autre exemple, la question consiste à reconnaître une chanson à partir d'un extrait sonore de celle-ci.

La génération de chaque écran correspondant à chaque question est réalisée de la façon suivante. Tout d'abord, le module (14, 24, 34) de jeu comprend des moyens (141, 241, 341) de sélection, comprenant, par exemple, un module ou sous-module de programme, pour sélectionner aléatoirement une oeuvre , par exemple musicale, parmi celles présentes dans la base de données (13, 23). Cette sélection aléatoire est réalisée, par exemple, par un numéro d'identification unique attribué à chaque oeuvre. Le numéro d'identification choisi doit être celui d'une oeuvre pour laquelle les ayants droits ont donnée leur accord pour que l'oeuvre soit utilisée dans un jeu. Pour ce faire la base (13, 23) de données comprend pour chaque oeuvre un drapeau (en anglais: flag) indiquant qu'elle ne doit pas être utilisée pour un jeu. Ainsi, après avoir sélectionné aléatoirement un numéro d'identification d'oeuvre, les moyens (141, 241, 341) de sélection vérifient la présence du drapeau. Si le drapeau est absent la sélection de l'oeuvre est validée par les moyens de sélection. Si le drapeau est détecté, l'oeuvre sélectionnée est ignorée et une autre oeuvre est choisie. Le choix d'une autre oeuvre est réalisé soit par une nouvelle opération de sélection aléatoire, soit en choisissant le numéro d'identification suivant dans la base de donnée. Les moyens de sélection effectuent à nouveau une vérification de la présence du drapeau. L'opération de sélection est répétée jusqu'à ce que l'oeuvre sélectionnée soit utilisable pour un jeu.

Le module (14, 24, 34) de jeu comprend un sous-module (143, 243) d'extraction des données nécessaires à la reproduction sonore d'un extrait de l'oeuvre sélectionnée. La quantité de données extraite correspond à un extrait de durée déterminée. Cette durée déterminée est de l'ordre de quelques secondes et peut être modifiée, par paramétrage ou automatiquement en fonction d'un programme (16, 26, 36) d'évaluation des résultats, pour rendre plus difficile ou plus facile la réponse ou le choix de réponse à la question. Les paramètres de sélection de l'extrait, par exemple sonore ou vidéo, sont mémorisés, par exemple, dans un fichier (17, 27, 37) de configuration lu par le sous-module (143, 243) d'extraction pour chaque génération d'une question avec une restitution sonore ou visuelle d'une oeuvre. De même, le fichier (17, 27, 37) de configuration du sous-module (143, 243) d'extraction est configuré pour que le moment dans l'oeuvre à partir duquel l'extrait débute, soit choisi, par exemple, de façon aléatoire. L'instant de démarrage de l'extrait peut également être configuré dans le fichier (17, 27, 37) de configuration du sous-module (143, 243) d'extraction. Ainsi, pour ce type de question basée sur la restitution sonore d'un extrait d'une oeuvre, le sous-module graphique génère un écran d'affichage dont la question comprend le texte de la question concernant l'oeuvre et simultanément le module (14, 24, 34) de jeu déclenche une commande de reproduction sur les moyens de reproduction sonore du terminal, de l'extrait de l'oeuvre collecté par le module d'extraction.

Dans une première variante, la question peut simplement être constituée d'un texte prédéterminé du type :
"quel est le titre de cette oeuvre ?" ou "quel est l'interprète de cette chanson ?" ou encore "en quelle année ce film est-il sorti en salle ?".

Dans une deuxième variante, la question peut également comprendre une information relative à l'oeuvre reproduite, pour constituer par exemple un indice sur la réponse correcte.

Dans ce cas, le module (14, 24, 34) de jeu comprend des moyens (142, 242, 342) de collecte, comprenant, par exemple, un module de programme, dans la base de données (13) d'au moins deux informations (INF 1, INF 2) déterminées relatives à l'oeuvre sélectionnée aléatoirement. Ces deux informations déterminées pourront être soit du même type pour tout le questionnaire, soit varier aléatoirement d'une question à l'autre en fonction du type de module (14, 24, 34) de jeu. Une première (INF 1) information collectée est alors utilisée par un sous-module graphique du module de jeu pour inscrire la question dans l'écran généré. La question comprend un texte invariable et une partie correspondant à la première information (INF 1) collectée. A titre d'exemple, une question est du type :
"En quelle année "INF1" a-t-il interprété cette chanson ?"

Dans cet exemple INF1 correspond au nom de l'artiste de la chanson qui est restituée.

"Quel est le réalisateur de ce film de "INF1"?".

Dans cet autre exemple, INF 1 correspond à l'année de sortie en salle de l'extrait de film restitué.

Dans les deux variantes décrites ci-dessus, l'écran généré par le sous-module graphique du module (14, 24, 34) de jeu comprend également au moins deux zones de sélection constituant les choix possibles de réponse à la question posée, sous forme par exemple de réponse à choix multiples. Parmi ces zones de sélection, une première zone comprend la deuxième information (INF 2) (titre, auteur, interprète, compositeur, réalisateur, acteur, éditeur, année de parution) relative à l'extrait de l'oeuvre sélectionnée et constituant la bonne réponse. Les autres zones de sélection contiennent des informations sélectionnées aléatoirement dans la base de données par le sous-module (141, 241, 341) de sélection et constituant les mauvaises réponses. Ces informations sélectionnées aléatoirement sont du même type (choisie parmi les types suivants: titre, auteur, interprète, compositeur, réalisateur, acteur, éditeur, année de parution) que la deuxième information (INF 2) déterminée affichée dans la première zone de sélection. En d'autres termes, les informations affichées dans les autres zones de sélection sont relatives à des oeuvres différentes de celle sélectionnée préalablement mais ont le même attribut dans la base de données que l'attribut de la deuxième information (INF 2) déterminée affichée dans la première zone de sélection. Ainsi, si l'information déterminée affichée dans la première zone de sélection est relative, par exemple, au titre de la chanson, alors le sous-module de sélection sélectionnera aléatoirement au moins un autre titre de chanson dans la base de données pour les autres informations affichées dans les zones de sélection restantes.

Afin de générer des questionnaires de difficulté différente, un fichier de paramètre est lu par le module de jeu (14, 24, 34) pour que, par exemple, le nombre de choix de réponses possibles soit plus important. Le fichier de paramètre du module de (14, 24, 34) jeu peut être configuré également pour sélectionner les "mauvaises réponses" non pas dans l'ensemble des oeuvres musicales ou audiovisuelles de la base de données mais dans une partie seulement de cette base (13, 23) de données ayant des points communs avec l'oeuvre sélectionnée aléatoirement de façon à ce que les réponses inexactes soit plausibles par rapport à la question posée. Ainsi, si l'oeuvre sélectionnée aléatoirement pour réaliser la question est de la musique de style country, les mauvaises réponses seront sélectionnées parmi des oeuvres du style musique country.

De même, l'oeuvre choisie aléatoirement pour former la question, peut être choisie non pas dans l'ensemble des oeuvres de la base de données mais parmi un type d'oeuvres, par exemple, appartenant toutes au même style, au même auteur ou encore au même artiste interprète.

L'intérêt du module de jeu selon la première variante est que chaque questionnaire est différent pour chaque jeu et que chaque questionnaire est réalisé de façon automatique et non prévisible. Il n'est donc pas possible de connaître à l'avance les questions posées.

Lorsque la base de données (13) n'est pas mémorisée sur le terminal (3), le module (34) de jeu comprend un sous-module (344) de communication qui construit des messages pour interroger la base de données (13) du serveur (1) spécialisé afin de recevoir les informations nécessaires à la génération de l'écran de questions, à savoir les informations déterminées sur un extrait d'oeuvre sélectionné aléatoirement pour construire la question et la réponse correspondante et les informations sélectionnées aléatoirement, par exemple dans le même type d'oeuvre ou dans les oeuvres de la même époque, pour former les mauvaises réponses. Ainsi, les messages envoyés par les terminaux comprennent des commandes de sélection destinées à un module de gestion de la base de données (13) du serveur (1). Les messages comprennent également l'adresse du terminal émetteur. Le serveur (1) comprend aussi un sous-module (101) de création et de transmission de messages pour transmettre le résultat de la collecte réalisée par le gestionnaire de la base de données, vers le terminal émetteur. Sur réception de la réponse du serveur, le sous-module (344) de communication du terminal (3) extrait le ou les informations collectées dans la base de données pour que le module (39) graphique du terminal les utilise pour générer l'écran de question.

De même, dans une autre variante, le module de jeu est déporté sur le serveur (1) spécialisé et le lancement du questionnaire est réalisé par une commande de démarrage du module (14) de jeu, envoyée par le terminal (3), qui comprend, seulement dans ce cas, un module (30) de démarrage du jeu avec le serveur, permettant l'activation par les moyens interactifs d'un bouton de lancement du jeu. Dans cette variante de réalisation, le serveur (1) comprend un module de communication qui génère des messages comprenant des informations représentatives de l'affichage correspondant à l'écran de la question. Un module (39) graphique du terminal est destiné à interpréter les messages transmis par le serveur pour construire les écrans de questions tel que décrit précédemment. Lorsqu'une question comprend la restitution sonore ou visuelle d'un extrait d'une oeuvre correspondant à la question, le serveur transmet dans le message, les informations représentatives de l'extrait sonore ou visuel ainsi qu'une commande d'exécution de cet extrait. Les informations représentatives de l'extrait sonore sont sous forme compressée et codée, si le terminal dispose de moyens de décompression et de décodage ou en clair dans le cas où le terminal ne réalise qu'une décompression.

Lorsque le sous-module graphique du terminal affiche l'écran des réponses à choix multiples, l'utilisateur, c'est-à-dire le joueur, est invité à répondre à la question, par l'intermédiaire des moyens d'interaction en pointant sur la réponse de son choix. Lorsque le module de jeu (14) est déporté sur le serveur (1) spécialisé, la sélection ou la validation de la sélection d'une zone de sélection provoque l'envoi d'un message contenant l'identifiant de la réponse choisie et une information d'identification du terminal ou du joueur et provoquant l'activation d'un sous-module (145, 245) de comparaison du serveur (1). Lorsque le module de jeu (24, 34) est mémorisé sur le terminal (2, 3), la sélection ou la validation de la sélection d'une zone sur l'écran par les moyens d'interaction, provoque l'activation d'un module (145, 245) de comparaison mémorisé sur le terminal (2, 3). Dans les deux cas, le sous-module (145, 245) de comparaison compare la position de la zone sélectionnée par le joueur et correspondant, par exemple à l'adresse d'une réponse mémorisée, avec la bonne réponse. Ce sous-module réalise ensuite, par le module (14, 24, 34) de jeu, la mise à jour d'un fichier (15, 25, 35) de résultats. Ce fichier de résultats comprend d'une part une identification du joueur et/ou du terminal (2, 3) associé et d'autre part, pour chaque question, soit une valeur booléenne "vrai" pour indiquer que la réponse sélectionnée par le joueur correspond à la bonne réponse, soit une valeur booléenne "faux" pour indiquer que la réponse sélectionnée par le joueur correspond à une mauvaise réponse.

Dans une autre variante, le fichier (15, 25, 35) de résultat comprend une identification du joueur et/ou du terminal (2, 3) et un compteur incrémenté d'une valeur déterminée, chaque fois que la réponse sélectionnée par le joueur correspond à la bonne réponse et un second compteur incrémenté ou le même compteur décrémenté d'une autre valeur, chaque fois que la réponse sélectionnée par le joueur correspond à une mauvaise réponse.

Selon une variante de réalisation, lorsque le module (24, 34) de jeu est mémorisé sur le terminal (2, 3), le sous-module (245) de comparaison du terminal est lié au sous-module (29) graphique pour déclencher l'affichage d'un écran indiquant à l'utilisateur, soit qu'il a correctement répondu, soit qu'il a commis une erreur et dans ce dernier cas indique la réponse correcte. Lorsque le module (14) de jeu est déporté sur le serveur (1), ce dernier comprend des moyens (101) de création et de transmission de messages vers le terminal, ces messages comprenant des informations et des commandes associées provoquant l'affichage d'un écran indiquant à l'utilisateur, soit qu'il a correctement répondu, soit qu'il a commis une erreur. Dans ce dernier cas la réponse correcte peut également être fournie.

Selon une autre variante de réalisation, le module de comparaison comprend des moyens d'émission de messages du serveur vers chacun des terminaux participant au jeu par adressage de chaque terminal pour provoquer la génération sur chaque terminal d'un écran déclenchant l'affichage d'un tableau visualisant les différents scores des joueurs intervenant chacun sur des terminaux différents.

Le fichier (15, 25, 35) de résultat peut également comprendre une information représentative du type et du niveau de difficulté du questionnaire. Le type du questionnaire correspond en fait au style, par exemple pour les oeuvres musicales, de musique (Country, rock, rap) sur lequel les questions sont posées.

Le fichier (15, 25, 35) de résultats est mémorisé, soit sur le terminal spécifique (2, 3) soit sur le serveur (1) spécialisé. Dans ce dernier cas, chaque fois que le joueur sélectionne une réponse, un sous-module, mémorisé sur le terminal (2), génère un message comprenant une information représentative de la position de la zone sélectionnée, ce message est ensuite transmis au serveur (1) spécialisé par le terminal (2, 3) avec l'identifiant du terminal et le serveur détermine, par l'intermédiaire du module (145, 245) de comparaison, si la réponse est correcte.

Après ou simultanément à la mise à jour du fichier (15, 25, 35) de résultat, le module (14, 24, 34) de jeu génère un nouvel écran comportant une nouvelle question.

A la fin du questionnaire, c'est-à-dire lorsqu'un nombre déterminé d'écrans de question a été affiché, le fichier (25, 35) de résultat mémorisé sur le terminal (2, 3) est transmis au serveur (1) spécialisé via le réseau (4) de communication.

Les fichiers (15, 25, 35) de résultat transmis par les terminaux ou mémorisés par le serveur (1) spécialisé sont traités par un module (11) de classement mémorisé sur le serveur (1), pour, dans un premier temps, extraire les informations représentatives des résultats réalisés par l'utilisateur de chaque terminal et dans un deuxième temps, pour mettre à jour un classement des différents joueurs en fonction des scores qu'ils ont réalisés en répondant aux questionnaires. Comme expliqué précédemment, les fichiers de résultats (15, 25, 35) peuvent comprendre une information représentative du type de musique sur laquelle est basé le questionnaire et/ou du niveau de difficulté. Ainsi, le classement des joueurs peut être établi en fonction du type de questionnaire, de sa difficulté et de la catégorie à laquelle appartient le joueur (débutant pour celui qui n'a jamais été enregistré par le serveur, avancé pour un joueur ayant obtenu des résultats dépassant un certain seuil, chevronné pour celui dépassant un second seuil plus élevé). Le serveur (1) spécialisé comprend des moyens (101) de création d'un message et envoie à chaque joueur, c'est-à-dire à chaque terminal (2, 3), un message contenant une information représentative du classement du joueur. Sur réception de ce message, un module graphique du terminal (2, 3) construit un écran indiquant le classement du joueur parmi les autres.

Selon le classement d'un joueur, le niveau de difficulté du questionnaire peut être modifié. Cette modification est réalisée, par exemple, par le téléchargement depuis le serveur (1) spécialisé d'un nouveau module (24, 34) de jeu qui vient en remplacement du module de jeu déjà présent sur le terminal.

Ce nouveau module de jeu comprend alors un nouveau fichier (17, 27, 37) de configuration et un nouveau fichier de paramètres contenant de nouveaux paramètres de création des questions.

De même, en fonction du classement réalisé par le serveur (1) les joueurs les mieux placés dans le classement peuvent se voir attribuer des lots. A titre d'exemple, lorsque le terminal est un système de reproduction d'oeuvres, les lots peuvent être la possibilité de sélectionner gratuitement au moins une chanson sur le système de restitution ou bien la possibilité de recevoir une consommation gratuite dans le bar où le système de reproduction est installé ou encore d'avoir la possibilité de participer gratuitement au prochain jeu lorsque la participation au jeu est payante.

Dans une autre variante de réalisation, le module (24, 34) est mis à jour par l'intermédiaire de l'envoi par le serveur (1) spécialisé d'un fichier de mise à jour comprenant essentiellement des commandes de modification du fichier de paramètres du module (24, 34) de jeu. Ainsi, comme expliqué précédemment, le nombre de choix possibles pour répondre à la question peut, par exemple, être modifié.

Une deuxième façon de réaliser le questionnaire consiste à créer préalablement chaque écran de question. Ainsi, toutes les questions de chaque questionnaire sont connues à l'avance. Cependant, chaque question est relative à une oeuvre dont les informations caractéristiques (titre, artiste...) sont mémorisées dans la base (13, 23) de données. Par conséquent, pour ce questionnaire, chaque écran comprend le texte de la question et une commande de collecte d'au moins une information relative à l'oeuvre objet de la question et contenue dans la base (13, 23) de données. De façon similaire à la première variante, l'écran de question comprend une première zone de sélection comprenant le texte de la bonne réponse et au moins une deuxième zone de sélection comportant le texte d'une mauvaise réponse. Le texte des zones de sélection correspondant aux mauvaises réponses peut, soit être obtenu par l'intermédiaire d'une commande de collecte d'une information déterminée de la base de données, soit être constitué par un texte prédéfini, soit être obtenu par l'intermédiaire d'une commande de sélection aléatoire d'une information dans la base de données.

A titre d'exemple, une question peut être basée sur le principe consistant à trouver le ou les mots ou informations manquantes dans un extrait d'oeuvre dont l'information manquante doit être retrouvée par le joueur. Pour ce faire, le module de jeu (14, 24, 34) comprend en plus du module d'extraction des informations représentatives de la reproduction audio ou vidéo de l'oeuvre, un sous-module de traitement de l'extrait destiné à mettre en sourdine ou occulter une partie de l'image d'une portion de l'extrait de l'oeuvre lors de sa restitution par le module de jeu.

Comme expliqué précédemment, le module d'extraction récupère les informations représentatives d'un extrait d'oeuvre, d'une durée déterminée, à partir d'un instant déterminé de l'oeuvre. Le sous-module de traitement est configuré pour mettre en sourdine ou occulter l'extrait, pendant sa restitution, à un instant déterminé de l'extrait et pendant une durée déterminée correspondant par exemple à l'information qui doit être retrouvée par le joueur.

Ainsi, une question de ce type comprend premièrement, une commande à destination du sous-module (143, 243) d'extraction pour récupérer dans la base de données, les informations représentatives de l'extrait de l'oeuvre choisie contenant le ou les informations à trouver. Deuxièmement, la question comprend une commande de mise en sourdine ou d'occultation, destinée au sous-module de traitement, par exemple pour réduire à zéro le volume sonore de la portion déterminée de l'extrait lors de sa restitution, ou cacher une portion de l'image. Troisièmement, la question peut comprendre une commande destinée au sous-module (142, 242, 342) de collecte pour extraire le nom de la chanson et/ou de l'artiste et/ou de l'éditeur et/ou toute autre information caractérisant une oeuvre afin de construire la question.

Dans une variante de réalisation, la mise en sourdine générée par le module de traitement est remplacée ou complétée par le mixage d'un signal sonore ou visuel masquant, à l'instant déterminé, la restitution sonore ou vidéo de l'information à trouver.

Dans une autre variante, par exemple dans le cas où les informations représentatives de la reproduction sonore de l'oeuvre ne seraient pas mémorisées dans la base de données, le questionnaire comprend, premièrement les données représentatives de l'extrait de l'oeuvre comprenant également le mixage du signal sonore ou la diminution de volume correspondant aux mots manquant; deuxièmement, une commande d'exécution de ces données sur les moyens de restitution sonore du terminal (2, 3).

La gestion des réponses des joueurs est réalisée tel que précédemment. Ainsi, pour chaque réponse le fichier de résultats est mis à jour par un module (145, 245) de comparaison du module de jeu. De même, le serveur (1) spécialisé effectue de la même façon le classement des joueurs et transmet le résultat du classement à chaque joueur.

Contrairement au premier type de questionnaire, le deuxième type de questionnaire est réalisé par avance, par conséquent, chaque module correspondant à un questionnaire du deuxième type comprend une information (drapeau, en anglais: flag) représentative de l'utilisation du questionnaire. Dès que le questionnaire a été utilisé pour un joueur ou un groupe de joueurs, le drapeau dans un tableau du serveur associé à ce joueur ou groupe de joueurs est validé, de sorte que ce questionnaire ne puisse pas être utilisé de nouveau par le joueur ou le même groupe. Lorsque le module de jeu est activé par un joueur ou une pluralité de joueurs, c'est-à-dire par un ou plusieurs terminaux, le module (14, 24, 34) de jeu vérifie la présence du drapeau sur le tableau correspondant. Si le drapeau est présent, un autre questionnaire du même type est transmis vers les terminaux (2, 3).

L'intérêt du deuxième type de questionnaire est qu'une pluralité de joueurs peut répondre simultanément ou successivement au même questionnaire. Dans ce dernier cas, le sous-module de classement du serveur (1) est configuré pour gérer les résultats d'une pluralité de joueurs, c'est-à-dire terminaux (2, 3) répondant simultanément ou successivement au même questionnaire. Pour ce faire, le module (145, 245) de comparaison décrit précédemment génère, après chaque réponse de chaque joueur, un message à destination du serveur. Ce message comprend une identification du terminal (2, 3) émetteur, et une information représentative de la réponse du joueur à une question identifiée, par exemple par son numéro. A partir de ces messages, le module (11) de classement réalise un tri des terminaux en fonction des réponses fournies. Ensuite, le serveur (1) spécialisé transmet, simultanément ou au moment correspondant dans je jeu, vers chaque terminal participant au même questionnaire un message comprenant une information représentative du classement général du jeu et éventuellement une information représentative des réponses faites par les autres joueurs. A partir de ce message, le sous-module graphique du terminal (2, 3) génère un écran permettant de visualiser le classement et éventuellement les réponses des autres participants.

Selon une variante de réalisation, le déclenchement du module (14, 24, 34) de jeu est précédé par une procédure de paiement. Cette procédure peut prendre différentes formes. Ainsi, lorsque le terminal (2) est un système de reproduction comprenant des moyens de paiement, la validation du mode jeu est réalisée, par une action sur des moyens de commande du système de reproduction audiovisuelle pour provoquer l'affichage d'un écran spécifique. Cet écran spécifique comprend un message invitant l'utilisateur à payer une somme d'argent par les moyens de paiement présents sur le terminal ou à entrer les informations nécessaires au débit ultérieur du compte bancaire de l'utilisateur pour sa participation au jeu. Après avoir payé ou donné les informations permettant le débit du compte, l'accès au module de jeu ou à l'affichage d'une ou plusieurs questions suivantes est validé pour l'utilisateur. Dès que les moyens de paiement du système de reproduction audiovisuelle ont détecté la somme demandée, le module de jeu est déclenché.

Lorsque le terminal (3) n'est pas équipé de moyens de paiement, l'activation du module de jeu est précédée d'une communication avec le serveur (1) spécialisé. En effet, comme expliqué précédemment et selon les modes de réalisation, la génération des écrans de jeu sur le terminal peut nécessiter une collecte d'informations dans la base de données du serveur (1) spécialisé. L'accès à la base de données est alors précédé par une procédure d'authentification du terminal. Ainsi, le terminal doit être identifié par le serveur pour accéder à la base de données. Cette identification est attribuée, par exemple lors d'une procédure d'abonnement réalisée préalablement à la première connexion du terminal au serveur. Cette procédure d'abonnement peut comprendre une étape de paiement à chaque nouvelle connexion, le serveur (1) spécialisé demande alors au terminal son identification pour l'autoriser à accéder à la base de données.

Dans une variante de réalisation de l'invention, le joueur dispose d'au moins un joker l'aidant dans le choix de sa réponse. La validation d'un joker est réalisée par l'intermédiaire, par exemple, d'un bouton virtuel représenté sur l'écran de questions affiché sur les moyens de visualisation du terminal (2, 3) et activé par l'utilisateur par l'intermédiaire des moyens d'interaction. La validation de l'utilisation d'un joker provoque le déclenchement d'un sous-module (146, 246, 346) joker qui modifie au moins un élément de la question pour faciliter la réponse du joueur.

A titre d'exemple, ce sous-module (146, 246, 346) joker peut provoquer la restitution de l'extrait de l'oeuvre avec des paramètres différents, par exemple en allongeant la durée de l'extrait. Dans ce cas, et uniquement pour cette question, le fichier de paramètre du module d'extraction est modifié pour que les données extraites de la base de données correspondent à un extrait plus long de l'oeuvre.

Dans un autre exemple, le sous-module (146, 246, 346) joker modifie l'écran d'affichage, par exemple en occultant au moins une zone de sélection correspondant à une mauvaise réponse.

Dans un autre exemple, le sous-module (146, 246, 346) joker fourni la bonne réponse et considère que le joueur a fourni la bonne réponse.

Ce sous-module (146, 246, 346) joker comprend également un fichier constituant un compteur de joker et contenant une information représentative du nombre de jokers disponibles. Ce fichier est mis à jour au début du jeu, par exemple, avec un nombre prédéterminé de jokers. Chaque fois que l'utilisateur sélectionne le bouton virtuel pour la validation d'un joker, le sous-module (146, 246, 346) joker vérifie si le nombre disponible est égal à zéro, si le nombre de jokers restant est différent de zéro, le nombre de jokers est décrémenté de un par le sous-module. Dans le cas contraire, le sous-module (146, 246, 346) joker provoque l'affichage d'un message indiquant que le crédit de jokers est épuisé. Dans une variante de réalisation, le compteur de jokers est initialisé à zéro au début du jeu. Lorsque l'utilisateur sélectionne pour la première fois le bouton virtuel pour la validation d'un joker, un écran de paiement de jokers est affiché, invitant le joueur à payer une somme d'argent pour obtenir au moins un joker. En fonction de la somme d'argent payée par le joueur, le compteur de jokers est mis à jour avec le nombre de joker payés par le jouer. Si au cours du jeu, le compteur de joker est réduit à zéro et que le joueur sélectionne le bouton virtuel pour la validation d'un joker, l'écran de paiement de joker peut de nouveau être affiché pour permettre au joueur de reconstituer son stock de jokers en effectuant un nouveau paiement.

La règle de paiement des jokers peut être établie pour que plus le nombre de jokers demandés par le joueur depuis le début du jeu est important, plus la somme nécessaire pour le paiement d'un joker est importante.

Lorsque le questionnaire comprend au moins une restitution d'au moins un extrait d'oeuvre, le module (14, 24, 34) de jeu comprend au moins un fichier de comptes-rendus (en anglais: log file) mis à jour par un sous-module spécifique. Ce fichier de comptes-rendus comprend une information représentative du nombre de fois où une oeuvre à été exécutée pendant le jeu, et éventuellement la durée des extraits reproduits. Le fichier de comptes-rendus est soit mémorisé sur le terminal (2, 3), soit mémorisé sur le serveur (1) spécialisé. Lorsque le fichier de comptes-rendus est mémorisé sur le terminal (2, 3), les moyens de communication transmettent périodiquement les informations contenues dans le fichier vers le serveur (1), puis le module de jeu (24, 34) mémorisé sur le terminal (2, 3) réinitialise le fichier de comptes-rendus.

Les informations contenues dans les fichiers de comptes-rendus sont traitées par un module (12) de calcul des redevances de droits d'auteur (royalties) qui extrait les informations relatives à l'utilisation des oeuvres pour déterminer et calculer les droits qui doivent être versés aux différents ayants droit des oeuvres.

Il est à noter que le procédé selon l'invention peut être utilisé, selon les applications, aussi bien sur un seul terminal que sur plusieurs terminaux, ces terminaux interagissant ou non avec un serveur, sans nécessiter de synchronisation ou de coordination dans le temps entre eux.

Une application consiste en particulier à utiliser ce procédé sur un terminal où sont mémorisées les oeuvres, ou des extraits de ces oeuvres, utilisées pour créer les différentes questions. Un tel système peut être prévu pour pouvoir fonctionner de façon autonome, pour permettre à un seul comme à plusieurs utilisateurs de jouer en utilisant ce terminal.

Selon une variante, le procédé comme le système selon l'invention peuvent également être prévus pour qu'un terminal puisse recevoir de nouvelles données concernant des oeuvres à utiliser pour la création des questions, ou concernant des questionnaires préétablis, ou des questionnaires créés aléatoirement sur d'autres terminaux, ou des scores réalisés sur d'autres terminaux pour ces questionnaires ou d'autres.

Dans un mode de réalisation, la réception de ces nouvelles données se fait par chargement depuis un support amovible tel qu'une disquette, un disque CD-ROM, ou une carte mémoire, ou depuis une station de traitement de donnée portable telle qu'une carte à puce.

Dans un mode de réalisation, le terminal est prévu pour pouvoir transférer ces mêmes informations dans le sens inverse sur un tel support ou station de traitement de donnée portable, et permettre ainsi à un utilisateur de jouer sur un terminal autonome avec des informations venant d'un autre terminal. De tels transferts dans un sens ou dans l'autre, ou les deux, peut ainsi être prévus pour permettre de comparer ou combiner ou échanger des fichiers de résultats entre plusieurs terminaux sans avoir besoin de les connecter entre eux ou à un serveur.

Dans un mode de réalisation, la réception de ces nouvelles données se fait par téléchargement de celles-ci, depuis un serveur distant sur lequel le terminal peut se connecter à la demande de l'utilisateur et de façon ponctuelle.

Ainsi, le système de divertissement selon l'invention se caractérise en ce que qu'il comprend au moins une station de traitement de données, dite terminal (2, 3), comprenant des moyens d'exécution d'un extrait d'une durée paramétrable d'une oeuvre mémorisée en tout ou partie sur ce terminal comprenant des moyens de restitution de l'oeuvre, des moyens d'interaction avec un ou plusieurs utilisateurs, des moyens de poser une question à un utilisateur du terminal, en proposant des réponses à choix multiples, la question étant relative aux informations caractéristiques de l'extrait de l'oeuvre, l'oeuvre étant sélectionnée par des moyens de sélection indépendants de l'utilisateur du terminal.

Selon une particularité, l'extrait d'oeuvre exécuté et les informations nécessaires à l'élaboration de la question relative aux informations caractéristiques de l'extrait de l'oeuvre et des réponses à choix multiple sont mémorisées dans une base de données stockée sur des moyens de mémorisation du terminal (2).

Selon une particularité, le terminal comprend des moyens de connexion (21, 31) avec un serveur (1) distant.

Selon une particularité, l'extrait d'oeuvre exécuté et les informations nécessaires à l'élaboration de la question relative aux informations caractéristiques de l'extrait de l'oeuvre et des réponses à choix multiple sont mémorisées dans une base de données stockée sur des moyens de mémorisation du serveur (1).

Selon une particularité, le terminal comprend des moyens de sélection et de validation de la réponse de l'utilisateur du terminal (2, 3), les moyens de validation mettant à jour un fichier (15, 25, 35) de résultats comportant une information représentative de la réponse choisie par l'utilisateur, ce fichier étant utilisé par le terminal (2, 3) ou par le serveur (1) pour comptabiliser le score réalisé par un ou plusieurs utilisateurs et éventuellement effectuer un classement de plusieurs utilisateurs d'un ou plusieurs terminaux.

Selon une particularité, l'extrait d'oeuvre exécuté et les informations nécessaires à l'élaboration de la question relative aux informations caractéristiques de l'extrait de l'oeuvre et des réponses à choix multiple sont mémorisées dans une base de données stockée sur des moyens de mémorisation du serveur (1) ou sur des moyens de mémorisation du terminal (2).

Selon une particularité, le terminal comprend des moyens de mémorisation aptes à mémoriser, sur un support amovible de mémorisation ou dans un objet portable présentant des capacités de traitement de données, de données représentant les oeuvres utilisées pour la création des questions, ou des questionnaires préétablis ou créés aléatoirement, ou des fichiers de résultats ou de compte rendus, ou une combinaison de ces éléments.

Selon une particularité, le terminal comprend des moyens de lecture aptes à lire, depuis un support amovible de mémorisation ou dans un objet portable présentant des capacités de traitement de données, de données représentant les oeuvres utilisées pour la création des questions, ou des questionnaires préétablis ou créés aléatoirement, ou des fichiers de résultats ou de compte rendus, ou une combinaison de ces éléments.

De même le procédé de divertissement met en oeuvre au moins une station de traitement de données, dite terminal, comprenant des moyens d'exécution d'un extrait d'une durée paramétrable d'une oeuvre, des moyens d'interaction avec au moins un utilisateur du terminal, et des moyens de poser une question à cet utilisateur en proposant des réponses à choix multiples, et comprend :
une étape d'exécution d'un extrait de durée paramétrable d'une oeuvre sur ce terminal,
une étape de création sur des moyens d'interaction du terminal (2, 3) d'une question relative à l'extrait en proposant des réponses à choix multiple, l'oeuvre étant sélectionnée indépendamment de l'utilisateur du terminal.

Selon une particularité, le procédé met en oeuvre un terminal comprenant des moyens de connexion à un serveur (1) distant.

Selon une particularité, le procédé comprend également une étape de mémorisation, par chaque terminal, ou par un serveur (1) distant, d'au moins un fichier (15, 25, 35) de résultats comportant une information représentative de la réponse choisie par l'utilisateur par l'intermédiaire des moyens d'interaction, pour comptabiliser le score réalisé par chaque utilisateur pour effectuer éventuellement un classement des utilisateurs.

Selon une particularité, l'étape de création, ou l'affichage de la question, sur les moyens d'interaction est précédée par une étape de paiement.

Selon une particularité, la sélection de l'oeuvre sur laquelle sont collectées les informations déterminées, est réalisée de façon aléatoire dans une base de données mémorisée soit sur le serveur, soit sur le terminal.

Selon une particularité, le choix de l'oeuvre dont l'extrait est tiré est effectué parmi un type déterminé d'oeuvres contenues dans la base de données.

Selon une particularité, au moins un fichier de comptes-rendus est mis à jour chaque fois qu'un extrait d'une oeuvre est reproduit dans un écran du questionnaire, le fichier de comptes-rendus contenant ou représentant l'identification de l'oeuvre et le nombre de fois où l'oeuvre est jouée, le fichier de comptes-rendus étant utilisé par le terminal ou transmis au serveur (1) pour calcul des redevances de droits d'auteur (royalties) à verser aux différents ayant-droit de l'oeuvre.

Selon une particularité, le procédé comprend une étape de sélection et de validation d'un joker, cette étape comprenant une étape de modification de la question et ou des réponses à choix multiples pour faciliter la réponse de l'utilisateur.

Selon une particularité, l'étape de sélection et de validation d'un joker ou d'affichage de la question modifiée est précédée par une étape de paiement dans laquelle l'utilisateur est invité à payer une somme d'argent pour obtenir un nombre déterminé de jokers.

Selon une particularité, le procédé comprend au moins une des étapes de:
mémorisation par le terminal, sur un support amovible de mémorisation ou dans un objet portable présentant des capacités de traitement de données, de données représentant les oeuvres utilisées pour la création des questions, ou des questionnaires préétablis ou créés aléatoirement, ou des fichiers de résultats ou de compte rendus, ou une combinaison de ces éléments ;
lecture depuis un support amovible de mémorisation ou dans un objet portable présentant des capacités de traitement de données, et mémorisation sur le terminal, de données représentant les oeuvres utilisées pour la création des questions, ou des questionnaires préétablis ou créés aléatoirement, ou des fichiers de résultats ou de compte rendus, ou une combinaison de ces éléments ;
comparaison ou combinaison de données représentant des questionnaires préétablis ou créés aléatoirement ou des fichiers de résultats provenant de plusieurs terminaux.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de divertissement basé surun jeu comportant des questions à choix multiples, comprenant au moins un serveur (1) connecté, via au moins un réseau (4) de communication, à au moins une station de traitement de données, dite terminal (2, 3) participant au jeu, le terminal comprenant des moyens de restitution de l'oeuvre, des moyens d'interaction avec un ou plusieurs utilisateurs, des moyens de poser une question à un utilisateur du terminal, en proposant des réponses à choix multiples, la question étant relative aux informations caractéristiques de l'extrait de l'oeuvre, l'oeuvre étant sélectionnée par des moyens (141, 241, 341) de selection, présents sur le serveur (1) ou un des terminaux (2, 3) participants au jeu et indépendants de l'utilisateur du terminal, dans une base de données (13) stockée sur des moyens de mémorisation du serveur (1), le terminal étant **caractérisé en ce qu'**il comprend des moyens d'exécution d'un extrait d'une durée paramétrable d'une oeuvre mémorisée en tout ou partie sur ce terminal, l'oeuvre pouvant également être sélectionnée par des moyens (141, 241, 341) de sélection, présents sur le serveur (1) ou un des terminaux (2, 3) participants au jeu et indépendants de l'utilisateur du terminal, dans une base de données (23) stockée sur des moyens de mémorisation d'un des terminaux (2) participant au jeu.

2. Système de divertissement selon l'une des revendications précédentes, **caractérisé en ce que** le terminal comprend des moyens de sélection et de validation de la réponse de l'utilisateur du terminal (2, 3), les moyens de validation mettant à jour un fichier (15, 25, 35) de résultats comportant une information représentative de la réponse choisie par l'utilisateur, ce fichier étant utilisé par le terminal (2, 3) ou par le serveur (1) pour comptabiliser le score réalisé par un ou plusieurs utilisateurs et éventuellement effectuer un classement de plusieurs utilisateurs d'un ou plusieurs terminaux.

3. Système de divertissement selon l'une des revendications précédentes, **caractérisé en ce que** le terminal comprend des moyens de mémorisation aptes à mémoriser, sur un support amovible de mémorisation ou dans un objet portable présentant des capacités de traitement de données, de données représentant les oeuvres utilisées pour la création des questions, ou des questionnaires préétablis ou créés aléatoirement, ou des fichiers de résultats ou de compte rendus, ou une combinaison de ces éléments.

4. Système de divertissement selon l'une des revendications précédents, **caractérisé en ce que** le terminal comprend des moyens de lecture aptes à lire, depuis un support amovible de mémorisation ou dans un objet portable présentant des capacités de traitement de données, de données représentant les oeuvres utilisées pour la création des questions, ou des questionnaires préétablis ou créés aléatoirement, ou des fichiers de résultats ou de compte rendus, ou une combinaison de ces éléments.

5. Système de divertissement selon l'une des revendications précédentes, **caractérisé en ce qu'**il comporte, sur le serveur ou sur le terminal, des moyens de paiement agencés pour déclencher une procédure de paiement préalablement au déclenchement du jeu.

6. Système de divertissement selon l'une des revendications précédentes, **caractérisé en ce qu'**il comporte un fichier de paramètre, lu par un module de jeu (14, 24, 34) pour déterminer le choix de l'oeuvre dont l'extrait est tiré parmi un type déterminé d'oeuvres contenues dans la base de données.

7. Système de divertissement selon l'une des revendications précédentes, **caractérisé en ce qu'**au moins un fichier de comptes-rendus est mis à jour chaque fois qu'un extrait d'une oeuvre est reproduit dans un écran du questionnaire, le fichier de comptes-rendus contenant ou représentant l'identification de l'oeuvre et le nombre de fois où l'oeuvre est jouée, le fichier de comptes-rendus étant utilisé par le terminal ou transmis au serveur (1) pour calcul des redevances de droits d'auteur (royalties) à verser aux différents ayant-droit de l'oeuvre.

8. Système de divertissement selon l'une des revendications précédentes, **caractérisé en ce qu'**il comporte sous-module (146, 246, 346) joker qui modifie au moins un élément de la question et/ou des réponses à choix multiples pour faciliter la réponse du joueur.

9. Système de divertissement selon la revendication précédente, **caractérisé en ce que** l'activation du sous-module (146, 246, 346) joker est soumise à l'acquittement d'un paiement.

## Patentansprüche

1. Unterhaltungssystem basierend auf einem Spiel, das Multiple-Choice-Fragen umfasst, aufweisend wenigstens einen Server (1), der über wenigstens ein Kommunikations-Netzwerk (4) mit wenigstens einer Datenverarbeitungsstation, genannt Terminal (2, 3), verbunden ist, der am Spiel teilnimmt, wobei der Terminal aufweist Mittel zur Werk-Wiedergabe, Mittel zur Interaktion mit einem oder mehreren Benutzern, Mittel zum Stellen einer Frage an einen Benutzer des Terminals unter Vorschlagen von Multiple-Choice-Antworten, wobei die Frage Informationen betrifft, die charakteristisch sind für den Ausschnitt des Werkes, wobei das Werk von Auswahlmittel (141, 241, 341), die auf dem Server (1) oder einem der Terminals (2, 3), die am Spiel teilnehmen, vorliegen und die unabhängig sind von dem Benutzer des Terminals, ausgewählt wird in einer Datenbank (13), die in Speichermitteln des Servers (1) gespeichert ist, wobei der Terminal **dadurch gekennzeichnet ist, dass** er aufweist Mittel zur Ausführung eines Ausschnitts von einer parametrierbaren Dauer eines Werkes, das komplett oder teilsweise auf diesem Terminal gespeichert ist, wobei das Werk ebenfalls von den Auswahlmittel (141, 241, 341), die auf dem Sever (1) oder einem der Terminals (2, 3), die am Spiel teilnehmen, vorliegen und die unabhängig sind von dem Benutzer des Terminals, ausgewählt werden kann in einer Datenbank (23), die in Speichermittel eines der Terminals (2) gespeichert ist, die am Spiel teilnehmen.

2. Unterhaltungssystem gemäß einem der vorhergehenden Ansprüche, **dadurch gekennzeichnet, dass** das Terminal aufweist Mittel zur Auswahl und zur validierung der Antwort des Benutzers des Terminals (2, 3), wobei die Mittel zur Validierung eine Ergebnisdatei (15, 25, 35) aktualisieren, die eine Information enthalt, die repräsentativ ist für die von dem Benutzer gewählte Antwort, wobei die Datei von dem Terminal (2, 3) oder von dem Server (1) verwendet wird zum Vermerken des Spielstands, der von einem oder mehreren Benutzern realisiert ist, und gegebenenfalls Vornehmen einer Einordnung von mehreren Benutzern von einem oder mehreren Terminals.

3. Unterhaltungssystem gemäß einem der vorhergehenden Ansprüche, **dadurch gekennzeichnet, dass** das Terminal aufweist Speichermittel, die in der Lage sind, auf einem abnehmbaren Speicherträger oder auf einem tragbaren Objekt, das Datenverarbeitungsfähigkeiten hat, Daten, die die Werke repräsentieren, die für die Erstellung der Fragen herangezogen werden, oder Fragebögen, die vorab festgelegt sind oder wahllos kreiert sind, oder Ergebnis- oder Protokolldateien oder eine Kombination dieser Elemente zu speichern.

4. Unterhaltungssystem gemäß einem der vorhergehenden Ansprüche, **dadurch gekennzeichnet, dass** der Terminal aufweist Lesemittel, die in der Lage sind, von einem abnehmbaren Speichermittel oder von einem tragbaren Objekt, das Datenverarbeitungsfähigkeiten hat, Daten, die die Werke repräsentieren, die für die Erstellung der Fragen herangezogen werden, oder Fragebögen, die vorab festgelegt oder wahllos kreiert sind, oder Ergebnis- oder Protokolldaten, oder eine Kombination dieser Elemente zu lesen.

5. Unterhaltungssystem gemäß einem der vorhergehenden Ansprüche, **dadurch gekennzeichnet, dass** es aufweist, auf dem Server oder auf dem Terminal, Auszahlungsmittel, die eingerichtet sind zum Auslösen einer Auszahlungsprozedur vorab der Spielauslösung.

6. Unterhaltungssystem gemäß einem der vorhergehenden Ansprüche, **dadurch gekennzeichnet, dass** es eine Parameterdatei aufweist, die von einem Spielmodul (14, 24, 34) gelesen wird zum Ermitteln der Wahl des Werks, dessen Ausschnitt gezogen wird, unter einem bestimmten Typ von Werken, die in der Datenbank entfalten sind.

7. Unterhaltungssystem gemäß einem der vorhergehenden Ansprüche, **dadurch gekennzeichnet, dass** wenigstens eine Protokolledatei jedes Mal aktualisiert wird, wenn ein Ausschnitt eines Werks wiedergegeben wird auf einen Fragebogenbildschirm, wobei die Protokolledatei die Identifikation des Werkes und die Anwahl der Male, die das Werk gespielt ist, enthalt oder repräsentiert, wobei die Protokolledatei verwendet wird von Terminal oder an den Server (1) übergeben wird zur Berechnung vorn Urheberrechtsgebühren (Lizenzgebühren), die an diverse Werkerechtinhaber zu entrichten sind.

8. Unterhaltungssystem gemäß einem der vorhergehenden Ansprüche, **dadurch gekennzeichnet**, das es aufweist ein Joker-Untermodul (146, 246, 346), das wenigstens ein Element der Frage und/oder der Multiple-Choice-Antworten modifiziert zum Erleichtern der Antwort für den Spieler.

9. Unterhaltungssystem gemäß dem vorhergehenden Anspruch, **dadurch gekennzeichnet, dass** die Aktivierung des Joker-Untermoduls (146, 246, 346) der Quittierung einer Zahlung unterliegt.

## Claims

1. Entertainment system based on a game having multiple-choice questions, comprising at least one server (1) connected, via at least one communications network (4), to at least one data processing station, caller a terminal (2, 3) taking part in the game, the terminal comprising means for retrieving the work, means for interaction with one or more users, means for asking a user of the terminal a question, offering multiple-choice answers, the question reflating to the information which is characteristic of the extract from the work, the work being selected by means for selection (141, 241, 341), present on the server (1) or one of the terminals (2, 3) taking part in the game and independent of the user of the terminal, from a data base (13) held on storage means of the server (1), the terminal being **characterised in that** it comprises means for execution of an extract of a duration configurable from a work which is stored wholly or partially on this terminal, the work also being selectable by means for selection (141, 241, 341) present on the server (1) or one of the terminals (2, 3) taking part in the game and independent of the user of the terminal, from a data base (23) held on storage means of one of the terminals (2) taking part in the game.

2. Entertainment system according to claim 1, **characterised in that** the terminal comprises means for selection and validation of the answer of the user of the terminal (2, 3), the means for validation updating a file (15, 25, 35) of results comprising information representative of the answer chosen by the user, this file being used by the terminal, (2, 3) or by the server (1) to record the score achieved by one or more users and optionally rank a plurality of users of one or more terminals.

3. Entertainment system according to one of the preceding claim, **characterised in that** the Terminal comprises means for storage capable of storing, on a removable storage medium or in a portable object exhibiting capacity for data processing, data representing the works used for the creation of the questions, or sets of questions prepared previously or created at random, or files of results or reports, or a combination of these element.

4. Entertainment system according to one of the preceding claims, **characterised in that** the terminal comprises means for reading capable of reading, from a removable storage medium or from a portable object exhibiting capacity for data processing, data representing the works used for the creation of the questions, or sets of questions prepared previously or created at random, or files of results or reports, or a combination of these elements.

5. Entertainment system according to one of the preceding claims, **characterised in that** it comprised, on the server or on the terminal, means for payment arranged to trigger a procedure for payment prior to triggering the game.

6. Entertainment system according to one of the preceding claims, **characterised in that** it comprises a parameter file, read by a game module (14, 24, 34) to determine the choice of the work the extract from which is drawn from a given type of works contained in the data base.

7. Entertainment system according to one of the preceding claims, **characterised in that** at least one file of reports is updated every time an extract from a work is reproduced in a screen of the set of questions, the file of reports containing or representing the title of the work and the number of times the work has been played, the file of reports being used by the terminal or transmitter to the server (1) for calculation of the loyalties to be paid to the different owners of the rights to the work.

8. Entertainment system according to one of the preceding claims, **characterised in that** it comprises a joker sub-module (146, 246, 346) which modifies at least one element of the question and/or the multiple-choice answers to make the answer of the player easier.

9. Entertainment system according to claim 8, **characterised in that** the activation of the joker sub-module (146, 246, 346) is conditional on the receipt of a payment.
